**Europäisches Patentamt**

**European Patent Office**

**Office européen des brevets**

(19)

(11) **EP 1 526 115 A1**

(12) **EUROPÄISCHE PATENTANMELDUNG**

(43) Veröffentlichungstag:
27.04.2005 Patentblatt 2005/17

(51) Int Cl.[7]: **C01B 33/12**, C09C 1/30

(21) Anmeldenummer: 03024279.6

(22) Anmeldetag: 23.10.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Universität Hannover**
**30167 Hannover (DE)**

(72) Erfinder:
• **Binnewies, Michael**
  **48161 Münster (DE)**
• **Giesenberg, Thomas**
  **31139 Hildesheim (DE)**

(74) Vertreter: **Eisenführ, Speiser & Partner**
**Patentanwälte Rechtsanwälte**
**Postfach 10 60 78**
**28060 Bremen (DE)**

(54) **Funktionalisierte Kieselsäure-Partikel**

(57) Beschrieben werden funktionalisierte Kieselsäure-Partikel, die an ihrer. Oberfläche > 6,5 funktionelle Gruppen pro nm$^2$ umfassen, die über Silizium kovalent an das Partikel gebunden sind, sowie Verfahren zur Herstellung solcher Partikel.

**EP 1 526 115 A1**

**Beschreibung**

Die vorliegende Erfindung betrifft insbesondere funktionalisierte Kieselsäure-Partikel, ein Verfahren zur Herstellung von mit Chlor funktionalisierten Kieselsäure-Partikeln und ein Verfahren zur Herstellung funktionalisierter Kieselsäure-Partikel aus mit Chlor funktionalisierten Kieselsäure-Partikeln durch teilweises oder vollständiges Substituieren des Chlors. Anorganische Partikel im Größenbereich zwischen ca. 10 nm und 1,5 $\mu$m kommen u. a. als Füllstoffe in vielen industriellen Produkten zum Einsatz, insbesondere spielen sie bei anorganischen/organischen Verbundmaterialien eine wichtige Rolle, z.B. als Verstärkerfüllstoff in organischen Polymermaterialien. So verleihen beispielsweise Ruß oder Kieselsäure Kautschukprodukten wie Autoreifen ihre mechanischen Festigkeit und Langlebigkeit.

Einer der wichtigsten Füllstoffe mit den genannten Merkmalen ist Siliziumdioxid ($SiO_2$) Dieses wird entweder durch eine thermische Umsetzung von Siliziumtetrachlorid ($SiCl_4$) in einer Knallgasflamme (Flammenhydrolyse) oder im Lichtbogenverfahren als pyrogene Kieselsäure, Handelsnamen z.B. Aerosil oder Cab-O-Sil, oder durch Fällungsreaktionen mit $H_2O$ (beispielsweise aus $SiCl_4$ oder Wasserglas) als Fällungskieselsäure erzeugt. $SiO_2$ ist auch zu mehr als 99,7 Gew.-% Bestandteil der ebenfalls aus Wasserglas herstellbaren Kieselgele.

Vor dem Hintergrund einer Vielzahl von Anwendungen für Partikel aus Kieselsäure ist es wünschenswert, möglichst gut an die jeweilige Anwendung angepasste Partikel zur Verfügung zu haben. Aufgabe der vorliegenden Erfindung war es also, Kieselsäure-Partikel anzugeben, die besser als aus dem Stand der Technik bekannte Partikel für eine Reihe von Anwendungen geeignet sind.

Gelöst wird diese Aufgabe durch Kieselsäure-Partikel, welche an ihrer Oberfläche > 6,5, bevorzugt > 7, wiederum bevorzugt > 8,5, besonders bevorzugt > 10 funktionelle Gruppen pro $nm^2$ umfassen, die über Silizium kovalent an das Partikel gebunden sind.

Kieselsäure-Partikel mit funktionellen Gruppen an ihrer Oberfläche werden nachfolgend auch "funktionalisierte Kieselsäure-Partikel" genannt. Vorzugsweise handelt es sich im Rahmen der vorliegenden Erfindung um funktionalisierte Kieselsäure-Partikel, die einen Durchmesser von mindestens 10 nm aufweisen und an ihrer Oberfläche funktionelle Gruppen, d.h. chemische Reste umfassen, die kovalent über Silizium an das Partikel gebunden sind.

Unter der Oberfläche eines Kieselsäure-Partikels ist im Rahmen des vorliegenden Textes die BET-Oberfläche zu verstehen, wie sie nach der DIN 66131: 1993-07 bestimmt wird (BET-Oberfläche).

Vorteile der erfindungsgemäßen Partikel sind, dass im Falle von mit Chlor funktionalisierten Partikeln die Chloratome auf einfache Art und Weise durch andere funktionelle Gruppen anderweitig funktionalisiert werden kann und dass allgemein durch die hohe Zahl an funktionellen Gruppen an der Oberfläche eine besonders gute Anpassung an die Anwendung möglich ist, für die die erfindungsgemäßen Kieselsäure-Partikel bestimmt sind. So kann nicht nur über die Anzahl der funktionellen . Gruppen pro $nm^2$ sondern insbesondere auch über die Art der funktionellen Gruppe (n) beispielsweise die Hydrophilie/Hydrophobie der erfindungsgemäßen Teilchen praktisch beliebig eingestellt werden. Es ist möglich, durch gezielte Auswahl der funktionellen Gruppen die Einbindung in beinahe beliebige Polymermatrizes zu verbessern, z.B. indem durch die funktionellen Gruppen die Ausbildung starker kovalenter Bindungen anstelle sehr viel schwächerer Wasserstoffbrückenbindungen ermöglicht wird. Dies ist beispielsweise durch die Auswahl einer funktionellen Gruppe mit ungesättigten Bindungen zu erreichen. Langkettige Kohlenwasserstoffreste als funktionelle Gruppen führen zu hydrophoben Kieselsäure-Partikeln. So führt beispielsweise Hexadecanoxy als funktionelle Gruppe zu einem Produkt, das in Wasser/Toluol die organische Phase bevorzugt. Materialprüfungen beispielsweise im Deutschen Institut für Kautschuktechnologie (DIK Hannover) haben gezeigt, dass erfindungsgemäße funktionalisierte Kieselsäure-Partikel kommerziellen Produkten überlegen sind, was beispielsweise die Einbindung der Partikel als anorganischen Füllstoff in Polymermatrizes betrifft.

Grundsätzlich können die erfindungsgemäßen Kieselsäure-Partikel für die gleichen Verwendungszwecke eingesetzt werden wie bekannte kommerzielle Produkte, jeweils die gleichen funktionellen Gruppen an der Oberfläche vorausgesetzt. So kann beispielsweise ein erfindungsgemäßes OH-funktionalisiertes Kieselsäure-Partikel u. a. als Füllstoff für Natur- und Synthetik-, insbesondere Silicon kautschuke, als Verdickungsmittel für pharmazeutische und kosmetische Produkte, als Tablettier- und Drageehilfsmittel, als AntiAbsetzmittel und Thixotrophiemittel für Anstrichmittel und Druckfarben, oder in der Papier-, Mineralöl- und Emailleindustrie zur Herstellung reiner Silikate verwendet werden. Durch die erhöhte Hydroxy-Gruppendichte sind bei den genannten Anwendungen die erfindungsgemäßen Partikel denen aus dem Stand der Technik in vielen Fällen überlegen.

Die Bruttozusammensetzung eines erfindungsgemäßen funktionalisierten Kieselsäure-Partikels mit einer einzelnen Sorte funktioneller Gruppen ist $Si_nO_{2nx}FU_{4n(1-x)}$, wobei Fu die Variable für die jeweilige ausgewählte funktioneile Gruppe ist. Die Variable x kann vorzugsweise die Werte $0{,}82 \leq x \leq 1$ annehmen und die Variable n vorzugsweise die Werte $10^4 - 10^{11}$.

Selbstverständlich kann ein erfindungsgemäßes funktionalisiertes Kieselsäure-Partikel auch 2, 3 oder mehr stofflich unterschiedliche funktionelle Gruppen tragen, die dann gemeinsam durch die Variable Fu repräsentiert werden.

Bevorzugt sind erfindungsgemäße funktionalisierte Kieselsäure-Partikel, deren funktionelle Gruppen ausgewählt sind aus der Gruppe bestehend aus: -Cl, -OH, -OR, -NR₂, -PR₂, -R, -H mit R = gesättigter oder ungesättigter organischer Rest mit vorzugsweise 1 - 20 C-Atomen oder siliziumorganischer Rest mit vorzugsweise 1 - 20 Siloxanbindungen.

Dabei können die bevorzugten erfindungsgemäßen funktionalisierten Kieselsäure-Partikel auch mehr als eine Art der genannten funktionellen Gruppen umfassen. Besonders bevorzugt sind erfindungsgemäße funktionalisierte Kieselsäure-Partikel, in denen mindestens 80 % der an ihrer Oberfläche vorhandenen funktionellen Gruppen Chloratome sind, bezogen auf die Gesamtzahl der funktionellen Gruppen. Diese besonders bevorzugten Partikel, nachfolgend auch "mit Chlor funktionalisierte Kieselsäure-Partikel" und "Partikel, die mit Chlor funktionalisiert sind" genannt, haben Produkteigenschaften, die sich der Tabelle 1 entnehmen lassen.

Tabelle 1:

| Produkteigenschaften | |
|---|---|
| **Eigenschaften** | **Chlorsiloxane aus erfindungsgemäßen, mit Chlor funktionalisierten Partikeln als Primärteilchen** |
| Primärteilchenmorphologie | sphärisch |
| Kristallinität | röntgenamorph |
| Primärteilchendurchmesser d in nm | 10-1500 |
| Primärteilchengrößenverteilung | eng ( Teilchengröße weicht zu 95 % max. +/- 30 % vom Partikeldurchmessermedian ab) |
| Struktur der Agglomerate | kettenförmig bis netzwerkartig |
| Chlorgehalte w(Cl) in Gew.-% | 5 bis 32 |
| Spezifische Oberfläche in $m^2/g$ (DIN 66131:1993-07) | 10 bis 680 |
| Chloratome pro $nm^2$ | 4 bis 11 |
| Porendurchmesser (nm) | 2 bis 14 (für mehr als 95 % der Poren) |

Dabei gilt für diesen Text die Definition für Poren gemäß der DIN 66 160, wonach eine Pore ein offener oder geschlossener Hohlraum in einem Festkörper ist. Eine Vertiefung wird dann als Pore bezeichnet, wenn das Verhältnis von Tiefe zu Durchmesser mindestens 1 beträgt. Die geometrische Form einer Pore ist dabei beliebig. Die Porengrößenverteilung und daraus abgeleitet die Porendurchmesserverteilung wird nach der BET-Methode ermittelt. Die Primärteilchengrößenverteilung wird mittels Rasterelektronenmikroskopie bestimmt und aus dieser Funktion der Partikeldurchmessermedian ermittelt.

Die Summenformel von mit Chlor funktionalisierten erfindungsgemäßen Kieselsäure-Partikeln wird gemäß der oben genannten Summenformel allgemein als $SiO_{2x}Cl_{4(1-x)}$ beschrieben, wenn als funktionelle Gruppen nur Chloratome vorhanden sind, was ganz besonders bevorzugt ist; über die Multiplikation der Summenformel mit dem Faktor n lässt sich die Masse und Zusammensetzung eines erfindungsgemäßen funktionalisierten Partikels (Primärteilchen, hier mit Chlor funktionalisiert) definieren (Summenformel = $Si_nO_{2nx}Cl_{4n(1-x)}$) der Massenanteil von Chlor bezogen auf die Gesamtmasse solcher Kieselsäure-Partikel kann bis zu 32 % betragen. Daraus ergibt sich für die Formel $Si_nO_{2nx}Cl_{4n(1-x)}$, dass $0,82 \leq x \leq 1$ ist. Die Variable n steht vorzugsweise für die Werte $10^4$ - $10^{11}$. Der Chlorgehalt manifestiert sich in hochreaktiven Si-Cl Bindungen auf der Oberfläche der Partikel. Über die spezifische Oberfläche und den Massenanteil an Chlor lässt sich eine Belegungsdichte an der Oberfläche von 4 bis zu 11 Chloratomen/$nm^2$ errechnen.

Die Erfindung betrifft auch eine Vielzahl (bevorzugt ein Pulver) (a) erfindungsgemäßer, insbesondere oben als bevorzugt beschriebener funktionalisierter Kieselsäurepartikel (mit > 6,5 funktionellen Gruppen pro $nm^2$ Oberfläche) und (b) sonstiger funktionalisierter Kieselsäurepartikel (z. B. mit $\leq$ 6,5 funktionellen Gruppen pro $nm^2$ Oberfläche), bei der der Durchmesser von mehr als 95 %, bevorzugt mehr als 99 % der einzelnen in der Vielzahl enthaltenen Kieselsäure-Partikel um maximal +/- 30 % vom Partikeldurchmessermedian (also dem Median der Partikeldurchmessergrößenverteilungsfunktion) abweicht und die in den Partikeln vorhandenen Poren zu 95 %, bevorzugt mehr als 99 %, einen Porendurchmesser von 2 bis 14 nm bevorzugt 10,5 bis 14 nm besitzen.

In dieser Vielzahl stellen die erfindungsgemäßen Partikel die Primärteilchen dar. Vorteile der gerade beschriebenen Partikel sind neben der verhältnismäßig homogenen Größenverteilung (= Primärteilchengrößenverteilung), dass sie relativ klein sind und über eine große BET-Oberfläche (s. Tabelle 1) verfügen, was u. a. ein hohes Verhältnis der Anzahl der funktionellen Gruppen eines Partikels zu seiner Masse ermöglicht. Bevorzugt sind erfindungsgemäße funktionalisierte Kieselsäure-Partikel, die röntgenamorph sind.

Die Erfindung betrifft auch ein Verfahren zur Herstellung von mit Chlor funktionalisierten, insbesondere oben als bevorzugt beschriebenen mit Chlor funktionalisierten Kieselsäure-Partikeln, bzw. einer oben beschriebenen Vielzahl von mit Chlor funktionalisierten Partikel, umfassend den Schritt: Umsetzen von Siliziumtetrachlorid oder einer Verbindung der allgemeinen Formel $Si_yO_{y-1}Cl_{(2y+2)}$ (mit $y \leq 4$, insbesondere $y = 2$, 3 oder 4) mit Sauerstoff unter Bedingungen, die eine Reaktion der beiden Substanzen miteinander ermöglichen und die bedingen, dass das dabei entstehende Reaktionsprodukt zu mehr als 99 Atom-% aus Silizium, Chlor und Sauerstoff besteht.

Dabei erfolgt die Herstellung der erfindungsgemäßen mit Chlor funktionalisierten Kieselsäure-Partikel (auch Chlorsiloxanpartikel, CSN) bevorzugt in einem kontinuierlichen Prozess und/oder gemäß folgender Reaktion von $SiCl_4$ mit Sauerstoff

$$n\ SiCl_4 + nx\ O_2 \rightarrow Si_nO_{2nx}Cl_{4n(1-x)} + 2nx\ Cl_2$$

Dabei gilt $10^4 \leq n \leq 10^{11}$ und $0{,}82 \leq x \leq 1$. Die resultierende Partikelgröße ist dabei abhängig von n (der Term $Si_nO_{2nx}Cl_{4n(1-x)}$ definiert hierbei genau ein Partikel). Es resultieren unter den genannten Voraussetzungen Partikel mit einem Durchmesser von 10 - 1500 nm.

Anstelle von $SiCl_4$ kann als Edukt auch eine Verbindung der allgemeinen Formel $Si_yO_{y-1}Cl_{(2y+2)}$ (mit $y \leq 4$, insbesondere $y = 2$, 3 oder 4) verwendet werden, wobei der Fachmann leicht die Variablen der o.g. Reaktionsgleichung sinngemäß anpassen kann (bevorzugt so, dass das erfindungsgemäße Reaktionsprodukt wieder durch $Si_nO_{2nx}Cl_{4n(1-x)}$ beschrieben wird).

Grundsätzlich ist auch die Verwendung längerkettigerer Moleküle, die der allgemeinen Formel entsprechen (also solcher mit $y > 4$), denkbar. Da aber mit zunehmender Kettenlänge der Dampfdruck abnimmt und die Reaktion der Edukte miteinander im erfindungsgemäßen Verfahren bevorzugt in der Gasphase abläuft, sind kurzkettige Chlor (poly)siloxane besser geeignet.

Besonderer Vorteil des erfindungsgemäßen Verfahrens zur Herstellung eines erfindungsgemäßen, mit Chlor funktionalisierten Partikels ist, dass gegebenenfalls in einem Reaktionsschritt kleine Partikel (s. Tabelle 1) mit großer BET-Oberfläche (s. Tabelle 1) und großer Anzahl (s. Tabelle 1) leicht substituierbarer Chloratome erhalten werden.

Die Umsetzung erfolgt im erfindungsgemäßen Verfahren bevorzugt bei Temperaturen oberhalb von 800 °C, besonders bevorzugt oberhalb 900 °C und wiederum bevorzugt oberhalb 970 °C. Bevorzugt wird sie in einem Heißwandströmungsreaktor durchgeführt, dessen Strömungsrohr wiederum bevorzugt, insbesondere bei Reaktionstemperaturen oberhalb 970 °C, aus Quarzglas besteht. Ebenfalls bevorzugt sind keramische Materialien für das Strömungsrohr. Letztere ermöglichen geringere Reaktionstemperaturen, weswegen sie für Reaktionstemperaturen $\leq$ 970 °C besonders bevorzugt sind, insbesondere also im Temperaturbereich von 800 °C - 970 °C.

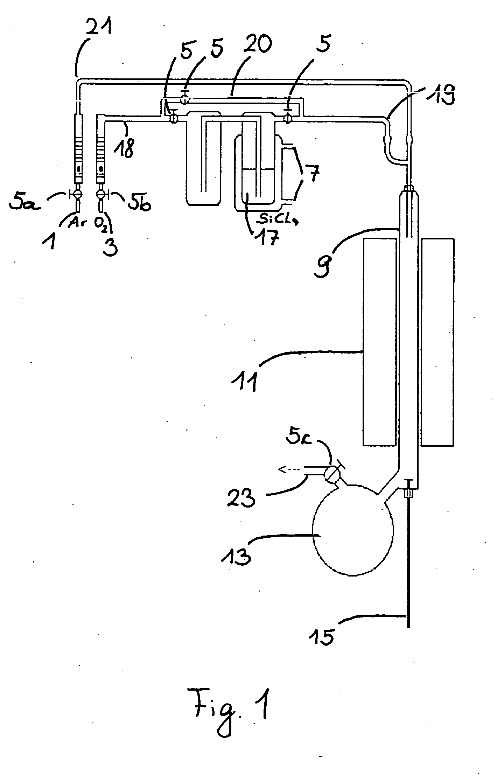

Eine Reaktionsapparatur für den Labormaßstab ist in Fig. 1 schematisch dargestellt. Für die Reaktion wird ein Gasgemisch aus $SiCl_4$ und $O_2$ mit konstantem Stoffmengenverhältnis $n(SiCl_4) : n(O_2)$ zum Einströmen in den Reaktor gebracht. Über den Volumenstrom $\dot{V}$ des Reaktionsgemisches und die Reaktorlänge werden verschiedene Verweilzeiten $\tau$ des Gasgemisches in der Reaktionszone eingestellt. Bevorzugt erfolgt die Reaktion unter Verwendung eines Schutzgases, ganz besonders bevorzugt unter Verwendung von Argon-Gas. Dadurch wird die Hydrolyse des Produktes verhindert. Des Weiteren kann über den Volumenstrom des Schutzgases zusätzlich die Verweilzeit und Teilchendichte in der Reaktionszone eingestellt werden.

Die bei der Reaktion gebildeten erfindungsgemäßen, mit Chlor funktionalisierten Kieselsäure-Partikel setzen sich als weißes Pulver in der Vorlage ab. Das bei der Reaktion entstehende Chlorgas entweicht oder kann — bevorzugt - im Kreislauf geführt zur Herstellung von neuem $SiCl_4$ benutzt werden. Letztere Vorgehensweise ist für einen industriellen Produktionsprozess besonders geeignet, da dann lediglich Silizium (oder ein $SiO_2$/C-Gemenge) und Sauerstoff neben relativ geringen Anteilen an Chlor als Ausgangsstoffe benötigt werden.

Besonders bevorzugt ist ein erfindungsgemäßes Verfahren, in dem der Chlorgehalt w(Cl) und/oder die spezifische Oberfläche und/oder die Partikelgröße des mit Chlor funktionalisierten Kieselsäure-Partikels über einen oder mehrere der Parameter (a) Verweilzeit $\tau$ im Strömungsrohr (b) Reaktionstemperatur (c) Stoffmengenverhältnis $n(SiCl_4) : n(O_2)$ beim Umsetzen (d) Volumenstromanteil des Schutzgases (e) Material des Strömungsrohres und (f) Ausrichtung des Strömungsrohres gesteuert werden.

Hinsichtlich des Einflusses der Syntheseparameter auf die Produkteigenschaften gilt - insbesondere bei Verwendung einer Apparatur gemäß Fig. 1 (siehe dazu die Figurenbeschreibung weiter unten) - das Folgende:

a) Verweilzeit τ

Über die Verweilzeit τ werden direkt Teilchendurchmesser *d* und Chlorgehalt w(Cl) der Partikel gesteuert. Bei einer Verlängerung der Verweilzeit werden Partikel mit größerem Teilchendurchmesser und geringerem Chlorgehalt generiert. Die Verweilzeit τ bezieht sich auf die Reaktionszone und beträgt bei einer minimalen Reaktionstemperatur von 970 °C mindestens 22 Sekunden (im Heißwandströmungsreaktor aus Glas).

b) Reaktionstemperatur

Die Reaktionstemperatur hat einen erheblichen Einfluss, sie muss mindestens 800 °C betragen. Bei einer Erhöhung der Temperatur werden zunehmend kleinere Teilchen mit kleinerem Chlorgehalt und geringerer spezifischer Oberfläche gebildet.

c) Stoffmengenverhältnis $n(O_2) : n(SiCl_4)$

Durch eine Vergrößerung des Stoffmengenverhältnisses $n(O_2) : n(SiCl_4)$ werden zunehmend kleinere Partikel mit geringerem Chlorgehalt dargestellt.

d) Volumenstromanteil des Schutzgases

Eine Beeinflussung des Teilchendurchmessers und des Chlorgehaltes ist auch über den Volumenstromanteil $\dfrac{\dot{V}(SG)}{\dot{V}(SG) + \dot{V}(O_2\,(SiCl_4))}$ des Schutzgases möglich. Dabei bedeuten $\dot{V}$ (SG) den Volumenstromanteil des Schutzgases (bevorzugt Argon) und $\dot{V}$ (O$_2$(SiCl$_4$)) den mit SiCl$_4$ gesättigten Volumenstrom an O$_2$, abhängig von der Temperatur des SiCl$_4$. Eine Verkleinerung des Volumenstromanteils des Schutzgases, insbesondere dann, wenn das Schutzgas Argon ist, führt zu größeren Partikeln mit kleinerem Chlorgehalt.

e) Material des Strömungsrohres

Auch das Material und die Oberflächenbeschaffenheit des Strömungsrohres üben einen Einfluss auf verschiedene Produkteigenschaften aus. Bei der Verwendung von Strömungsrohren aus keramischen Materialien werden im Gegensatz zu Strömungsrohren aus Quarzglas bei sonst gleichen Synthesebedingungen erfindungsgemäße mit Chlor funktionalisierte Partikel erhalten, deren Chlorgehalte und Primärpartikeldurchmesser zum Teil erheblich reduziert sind. Keramische Materialien können die Synthese katalysieren, so dass nur geringere Reaktionstemperaturen benötigt werden.

f) Ausrichtung des Strömungsrohres

Die Ausrichtung des Reaktors bzw. des Strömungsrohres (vertikal oder horizontal bewirkt bei sonst gleichen Synthesebedingungen eine Veränderung der Korngrößenverteilung und des Chlorgehaltes. Bei vertikaler Ausrichtung werden nicht nur engere Korngrößenverteilungen der erfindungsgemäßen mit Chlor funktionalisierten Partikel (s. Tabelle 1) gegenüber der horizontalen Anordnung erreicht, sondern vielmehr hat dies positive Auswirkungen auf den kontinuierlichen Produktionsprozess, da es zu keinerlei Ablagerungen im Reaktor kommt.

Der Fachmann kann bei Wahl einer anderen Reaktionsapparatur die entsprechende Abhängigkeit der Produkteigenschaften von den Syntheseparametern ermitteln.

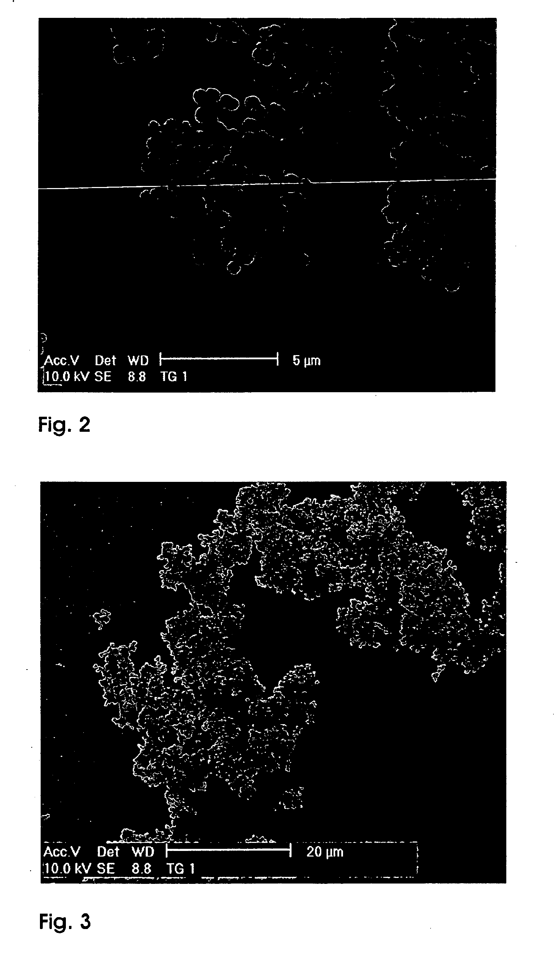

Beispiele für erfindungsgemäße mit Chlor funktionalisierte Kieselsäure-Partikel (im agglomerierten Zustand) sind in den Figuren 2 und 3 dargestellt (siehe dazu die Figurenbeschreibung weiter unten).

Ein weiterer Aspekt der Erfindung betrifft ein Verfahren zur Herstellung erfindungsgemäßer funktionalisierter Kieselsäure-Partikel umfassend die Schritte

a) Bereitstellen eines mit Chlor funktionalisierten Kieselsäure-Partikels (wie oben beschrieben).

b) teilweises oder vollständiges Substituieren des Chlors.

Das Chlor in mit Chlor funktionalisierten Kieselsäure-Partikeln findet sich insbesondere an der Oberfläche der Teilchen (einschließlich der Poren). Da die chemische Bindung zwischen Silizium und Chlor besonders reaktiv ist, können die Chloratome auf besonders einfache Weise (wenigstens teilweise) durch andere funktionelle Gruppen, auch durch organische Reste, substituiert werden.

Bevorzugt ist dabei ein erfindungsgemäßes Verfahren, in dem zum Substituieren des Chlors ein Stoff eingesetzt wird, ausgewählt aus der Gruppe bestehend aus: H$_2$O R-OH, R$_2$NH, R$_2$PH, R-Mg-X, Li-R und LiAlH$_4$, mit R = gesättigter oder ungesättigter organischer Rest und X = Halogen

Die gewünschten Eigenschaften der erfindungsgemäßen funktionalisierten Kieselsäure-Partikel können dabei durch die entsprechenden Reaktionspartner eingestellt werden (vergleiche die Beispiele weiter unten). Wegen der Hydrolyseempfindlichkeit der erfindungsgemäßen, mit Chlor funktionalisierten Kieselsäure-Partikel ist es in der Regel erforderlich, unter Wasserausschluss zu arbeiten. Die Reaktionspartner für erfindungsgemäße, mit Chlor funktionalisierte Kieselsäurepartikel können in protische und aprotische Substanzen eingeteilt werden, vergleiche hierzu die Tabellen 2 und 3.

| Tabelle 2: Funktionalisierung mit protischen Reaktionspartnern (Beispiele) | |
|---|---|
| **Reaktionspartner** | **Produkt** |
| 1) $H_2O$ | OH-funktionalisiertes Kieselsäure-Partikel |
| 2) R-OH | z.B. Alkoxy-funktionalisiertes Kieselsäure-Partikel |
| 3) $R_2NH$ | sek. Amino-funktionalisiertes Kieselsäure-Partikel |
| 4) $R_2PH$ | sek. Phosphan-funktionalisiertes Kieselsäure-Partikel |

mit R = gesättigter oder ungesättigter organischer Rest

| Tabelle 3: Funktionalisierung mit aprotischen Reaktionspartnern (Beispiele) | |
|---|---|
| **Reaktionspartner** | **Produkt** |
| 1) R-Mg-X | z.B. Alkyl- oder aryl-funktionalisiertes Kieselsäure-Partikel |
| 2) Li-R | z.B. Alkyl-oder aryl-funktionalisiertes Kieselsäure-Partikel |
| 3) $LiAlH_4$ | H-funktionalisiertes Kieselsäure-Partikel |

mit R = (gesättigter oder ungesättigter) organischer Rest, X = Halogen

Im allgemeinen gilt, dass bei der Substitution (wenigstens eines Teils) der Chloratome der erfindungsgemäßen mit Chlor funktionalisierten Kieselsäure-Partikel mittels protischer Reaktanden der Einsatz von Basen nötig ist, um eine möglichst vollständige Reaktion und damit eine dichte Bedeckung der Partikeloberflächen zu erreichen. Synthesevorschriften für einzelne Gruppen von Reaktanden finden sich in den Beispielen weiter unten.

Auch zur (wenigstens teilweisen) Substitution der Chloratome der erfindungsgemäßen mit Chlor funktionalisierten Kieselsäure-Partikel mittels aprotischer Reaktionspartner finden sich nähere Angaben zur Reaktionsführung in den unten aufgeführten Beispielen.

Es gibt eine hohe Zahl von Verwendungsmöglichkeiten für erfindungsgemäße, anders als mit Chlor funktionalisierte Kieselsäure-Partikel:

Erfindungsgemäße, Alkoxy-funktionalisierte Kieselsäure-Partikel (mit funktioneller Gruppe -OR) sind für Füllstoffanwendungen insbesondere dann von Interesse, wenn der Rest R ein ungesättigter Rest ist, der in eine Polymermatrix eingebunden werden kann (z.B. ein Polybutadienrest). Damit wird eine Anbindung des Füllstoffes durch die Ausbildung starker kovalenter Bindungen anstelle der sehr viel schwächeren Wasserstoffbrückenbindungen ermöglicht. Über die funktionelle Gruppe kann die Hydrophilie/Hydrophobie von erfindungsgemäßen funktionalisierten Kieselsäure-Partikeln praktisch beliebig eingestellt werden (vergleiche oben). Produkte, die den erfindungsgemäßen ähnlich sind, können im Prinzip auch aus bereits aus dem Stand der Technik bekannten Produkten hergestellt werden, allerdings nicht auf so einfachem Wege und insbesondere nicht mit der beschriebenen möglichen hohen Dichte an funktionellen Gruppen auf der Oberfläche.

Erfindungsgemäße Alkyl-funktionalisierte Kieselsäure-Partikel sind von besonderem Interesse, da sie nicht den Nachteil der Hydrolysierbarkeit der Si-O-C-Bindung bei sehr niedrigen oder sehr hohen pH-Werten besitzen. Als Einsatzgebiet für solche Partikel bieten sich Adsorbentien in der Chromatographie an. Aus kommerziell erhältlichen Produkten sind Kieselsäure-Partikel, die den erfindungsgemäßen Alkyl-funktionalisierten Partikeln ähnlich sind, praktisch nicht mit vertretbarem Aufwand und wenn, dann nur mit geringerer Dichte der funktionellen Gruppen, erhältlich.

Erfindungsgemäße, sekundär Amino-funktionalisierte Kieselsäure-Partikel eignen sich für Spezialanwendungen, z.B. als Trägermaterial für "harte" Lewis-Säure Katalysatoren. Sie sind derzeit aus kommerziell erhältlichen Produkten nicht ohne erheblichen Aufwand und wenn, wiederum nur mit geringerer Dichte der funktionellen Gruppen, herstellbar.

Erfindungsgemäße, mit sekundärem Phosphan-funktionalisierte Kieselsäure-Partikel eigenen sich ebenfalls für Spezialanwendungen z.B. als Trägermaterial für "weiche" ("hart" bzw. "weich" im Sinne der Definition von Pearson) Edelmetall-Katalysatoren. Für ihre Herstellung gilt das Gleiche wie für die erfindungsgemäßen, sekundär Amino-funktionalisierten Kieselsäure-Partikel.

Erfindungsgemäße Wasserstoff-funktionalisierte Kieselsäure-Partikel können als Ausgangsstoff für eine Reihe weiterer ebenfalls erfindungsgemäß funktionalisierter Kieselsäure-Partikel dienen. Hier bietet sich als einfache und Erfolg versprechende Folgereaktion die Hydrosilierung an, bei der die Si-H-Bindung mit einer endständigen C-C-Doppelbindung reagiert. So können für den jeweiligen Anwendungszweck maßgeschneiderte organische Funktionalitäten über eine stabile Si-C-Bindung auf die Partikeloberfläche gebracht werden. Für die Herstellung von erfindungsgemäßen, Wasserstofffunktionalisierten Kieselsäure-Partikeln aus kommerziellen Produkten gilt das für die beiden letztgenannten Gruppen von funktionalisierten Kieselsäure-Partikeln Gesagte ebenfalls.

Die Erfindung wird nachfolgend anhand von Ausführungsbeispielen und Figuren erläutert.

Es stellen dar:

Fig. 1 eine schematische Darstellung eines Versuchsreaktors zur Herstellung erfindungsgemäßer, mit Chlor funktionalisierter Kieselsäure-Partikel;

Fig. 2 ein detailliertes SEM-Bild von erfindungsgemäßen, mit Chlor funktionalisierten Kieselsäure-Partikeln;

Fig. 3 eine Überblicksdarstellung über zu einem Netzwerk agglomerierter erfindungsgemäßer, mit Chlor funktionalisierte Kieselsäure-Partikel;

Fig. 4 das Infrarot-Spektrum erfindungsgemäßer, Butyl-funktionalisierter Kieselsäure-Partikel;

Fig. 5 das $^{29}$Si-NMR-Spektrum erfindungsgemäßer Butyl-funktionalisierter Kieselsäure-Partikel.

Die in Fig. 1 schematisch dargestellte Apparatur zur Herstellung erfindungsgemäßer, mit Chlor funktionalisierter Kieselsäure-Partikel umfasst eine Einlassöffnung 1 für die Argon-Zufuhr, eine Einlassöffnung 3 für die Sauerstoffzufuhr, Absperrhähne 5, einen Absperrhahn zur Regulation der Argon-Zufuhr 5a, einen Absperrhahn zur Regelung der Sauerstoffzufuhr 5b, einen Kryostatkreislauf 7 zur Thermostatisierung des flüssigen $SiCl_4$ in einem Speicher 17, eine Sauerstoffzuleitung 18, eine Argon-Zuleitung 21, eine Sauerstoffumgehungsleitung 20, eine Leitung für das $O_2$/$SiCl_4$-Gemisch 19, ein beheizbares Strömungsrohr 9, einen Röhrenofen 11 zur Beheizung des Strömungsrohres 9, einen Vorlagekolben 13 zur Aufnahme des Reaktionsproduktes, eine Abluftleitung 23, einen Absperrhahn 5c zur Regulation der Abluft, und einen Glasschieber 15 zum Abstreifen anhaftender erfindungsgemäßer Partikel aus demStrömungsrohr 9.

Die Zufuhr des Sauerstoffes wird über den Absperrhahn 5b geregelt. Der in die Versuchsapparatur einströmende Sauerstoff strömt durch die Sauerstoffzuleitung 18 in die mit $SiCl_4$ bestückten Speicher 17, dort erfolgt eine (wenigstens teilweise) Sättigung des Sauerstoffgases mit $SiCl_4$.

Nach Verlassen des Speichers 17 strömt der wenigstens teilweise mit $SiCl_4$ gesättigte Sauerstoff in die Leitung für das $O_2$/$SiCl_4$-Gemisch 19. Dort kann der Sauerstoffanteil durch eine geeignete Stellung der Absperrhähne 5 - falls erwünscht - erhöht werden.

Die Zufuhr des Argons wird über den Absperrhahn 5a geregelt. Das in die Versuchstemperatur einströmende Argon strömt durch die Argon-Zuleitung 21 bis zu der Stelle, wo sich diese Leitung mit der Leitung für das $O_2$/$SiCl_4$-Gemisch 19 vereinigt. Dort mischt sich das Argongas mit dem $O_2$/$SiCl_4$-Gemisch und strömt mit diesem in das Strömungsrohr 9 ein. Das Strömungsrohr 9 wird durch den Röhrenofen 11 auf der gewünschten Reaktionstemperatur (etwa 1000 °C) gehalten. Innerhalb des Strömungsrohres findet die Reaktion zwischen $O_2$ und $SiCl_4$ statt. Die Verweilzeit des Reaktionsgemisches innerhalb des Strömungsrohres kann u. a. über die Volumenströme der Gase Sauerstoff und Argon geregelt werden. Der das Reaktionsprodukt tragende Gasstrom verlässt das Strömungsrohr 9 und tritt in den Vorlagekolben 13 ein. Dort lagert sich das Reaktionsprodukt, d.h. mit Chlor funktionalisierte Kieselsäure-Partikel, ab. Der resultierende Gasstrom (chlorhaltig) verlässt die Apparatur über die Abluftleitung 23, geregelt durch den Absperrhahn 5c. Dabei ist es möglich, das im Gasstrom enthaltene Chlor zur Herstellung von neuem $SiCl_4$ zu verwenden (nicht dargestellt). Das Reaktionsprodukt kann aus der Vorlage entnommen werden.

Beispiel 1: Synthese von mit Chlor funktionalisierten Kieselsäure-Partikeln

In einer schematisch in Fig. 1 dargestellten Apparatur wurden unter den in Tabelle 4 angegebenen Versuchsparametern $SiCl_4$ und $O_2$ miteinander zur Reaktion gebracht. Der Reaktor wurde vertikal aufgebaut und als Material des Strömungsrohrs wurde Korund verwendet. (5 Versuchsläufe CSN_TQ01 bis CSN_TQ05):

Tabelle 4:

| Synthesebedingungen der Versuchsreihe CSN_TQ | | | | | | |
|---|---|---|---|---|---|---|
| Versuchsreihe | Volumenstrom | | Länge und Volumen des Reaktors | | Verweilzeit $\tau$ | $n(SiCl_4) : n(O_2)$ | Volumenstrom-anteil Ar |
| | $\dot{V}(O_2)$ in L/h | $\dot{V}(Ar)$ in L/h | /in cm | V in cm$^3$ | in s | | |
| CSN_TQ | 10,1 | 5,85 | 48 | 217,2 | 49 | 0,23 | 0,58 |

Tabelle 5:

| Ergebnisse der jeweiligen Versuchsläufe / ausgewählte Produkteigenschaften abhängig von der Reaktortemperatur | | | | | | |
|---|---|---|---|---|---|---|
| | | | $w(Cl)/$ | $A(BET)/$ | | $d(Poren)/$ |
| Versuch | $T/°C$ | $d/nm$ | Gew.-% | m$^2$/g | Chloratome/nm$^2$ | nm |
| CSN_TQ1 | 1050 | 380-795 | 25 | 645,8 | 6,6 | 3,3 |
| CSN_TQ2 | 1100 | 318-590 | 12,2 | 440,3 | 4,7 | 3,3 |
| CSN_TQ3 | 1200 | 50-264 | 7,7 | 341,5 | 3,8 | 4,7 |
| CSN_TQ4 | 1300 | 26-142 | 9 | 278,2 | 5,5 | 5,9 |
| CSN_TQ5 | 1350 | 20-120 | 10,2 | 158,2 | 10,9 | 8,4 |

Beispiel 2: Substitution von Chlor an mit Chlor funktionalisierten Kieselsäure-Partikeln mittels Wassers

Die mit Chlor-funktionalisierten Kleselsäure-Partikel werden zur Hydrolyse der Si-Cl-Gruppen in destilliertes Wasser eingerührt. Die dabei freiwerdende Säure wird mit Natronlauge (c = 0,1 mol/L) bis pH 7 neutralisiert und die Dispersion für 12 h gerührt. Nach Abtrennen des Produkts von der wässerigen Phase wird dieses mit Diethylether gewaschen, um den anschließenden Trocknungsprozess im Vakuum bei 70 °C (12 h) zu beschleunigen und die Bildung von festeren Agglomeraten zu unterdrücken. Bei dem Produkt handelte es sich um Hydroxy-funktionalisierte Kieselsäure-Partikel.

Beispiel 3: Substitution von Chlor an mit Chlor funktionalisierten Kieselsäure-Partikeln (CSN) mittels Alkoholen

Bei der Umsetzung von CSN mit Alkoholen werden jeweils 3 Äquivalente des entsprechenden Alkohols bezogen auf den Stoffmengenanteil Chlor des CSN verwendet. In einem Schlenk-Kolben wird eine Dispersion aus 0,5 g CSN und 10 mL Tetrahydrofuran hergestellt. Diese wird dann unter Rühren mit dem entsprechenden Alkohol und anschließend mit 1,5 Äquivalenten Pyridin versetzt. Das Reaktionsgemisch wird über Nacht unter Rückfluss gekocht.

Zur Aufarbeitung des Produkts wird mit folgenden Reagenzien gewaschen: 1. verwendeter Alkohol, 2. Toluol und 3. Trichlormethan. Die Trocknung des Produkts erfolgt bei 70 °C im Vakuum für 12 h. Für den Einsatz derartig modifizierter Partikel unter wässerigen Bedingungen empfiehlt sich ein zusätzliches Waschen mit einem Puffer mit einem pH-Wert von 7 (z.B. $KH_2PO_4Na_2HPO_4$-Puffer). Das Reaktionsprodukt sind - abhängig vom verwendeten Alkohol - Alkoxy-funktionalisierte Kieselsäure-Partikel.

Beispiel 4: Substitution von Chlor an CSN durch sekundäre Amine

Es werden 0,5 g CSN und 3 Äquivalente des entsprechenden sekundären Amins bezogen auf den Stoffmengenanteil Chlor des CSN eingesetzt. In einem Schlenk-Kolben wird das CSN in 10 mL Tetrahydrofuran dispergiert.

Das sekundäre Amin wird zu der Dispersion gegeben und diese Reaktionsmischung dann über Nacht unter Rückfluss gekocht. Bei dieser Reaktion dient das Amin sowohl als Reaktand und gleichzeitig auch als Base.

Zur Aufarbeitung des Produkts wird mit folgenden Reagenzien gewaschen: 1. Tetrahydrofuran, 2. Toluol und 3. Trichlormethan. Das Amino-funktionalisierte CSN wird im Vakuum bei 70 °C in 12 h getrocknet. Das Reaktionsprodukt waren - abhängig vom eingesetzten sekundären Amin - sekundär Amino-funktionalisierte Kieselsäure-Partikel.

Beispiel 5: Substitution von Chlor an CSN mit sekundären Phosphanen

Zur Modifizierung der CSN-Partikel mit sekundären Phosphanen kommen Dialkylphosphan-Lithium Verbindungen zum Einsatz. Es werden 0,5 g CSN mit 3 Äquivalente der entsprechenden Phosphor-Verbindung in Bezug auf den Stoffmengenanteil Chlor des CSN umgesetzt. Dafür wird das CSN in 10 mL Tetrahydrofuran dispergiert und diese Dispersion mit Eiswasser gekühlt. Nach langsamer Zugabe der Dialkylphopshan-Lithium Verbindung wird das Reaktionsgemisch für 12 h unter Rückfluss gekocht. Zum Aufarbeiten wird mit folgenden Lösungsmitteln gewaschen: 1. destilliertes Wasser, 2. Toluol und 3. Aceton. Anschließend wird das Produkt im Vakuum bei 70 °C für 12 h getrocknet. Das Produkt waren - abhängig vom eingesetzten sekundären Phosphan - mit sekundärem Phosphan-funktionalisierte Kieselsäure-Partikel.

Beispiel 6: Substitution von Chlor an CSN mittels Grignard-Verbindungen

Zu einer Dispersion aus 0,5 g CSN und 10 mL Tetrahydrofuran werden unter Rühren langsam 2 Äquivalente der Grignard-Verbindung bezogen auf den Stoffmengenanteil Chlor des eingesetzten CSN gegeben. Das Reaktionsgemisch wird für 12 h unter Rückfluss gekocht. Danach wird die Dispersion mit einem Eiswasserbad gekühlt und überschüssiges Grignard-Reagenz durch Zugabe von Salzsäure ($c$ = 0,1 mol/L) zerstört. Dabei ist darauf zu achten, dass der pH-Wert bei ca. 4 liegt. Anschließend folgt die Aufarbeitung des Produkts durch Waschen mit folgenden Reagenzien: 1. destilliertes Wasser, 2. Aceton und 3. Methanol. Die Trocknung des Produkts wird bei 70 °C im Vakuum durchgeführt. Das Produkt waren - abhängig von der eingesetzten Grignard-Verbindung - Alkyl-funktionalisierte Kieselsäure-Partikel.

Beispiel 7: Substitution von Chlor an CSN mittels Organolithium-Verbindungen

Die Synthese wird wie bei der Substitution mittels Grignard-Verbindungen mit der entsprechenden Organolithium-Verbindung durchgeführt. Das Produkt waren - abhängig von der eingesetzten Organolithium-Verbindung - Alkyl-funktionalisierte Kieselsäure-Partikel.

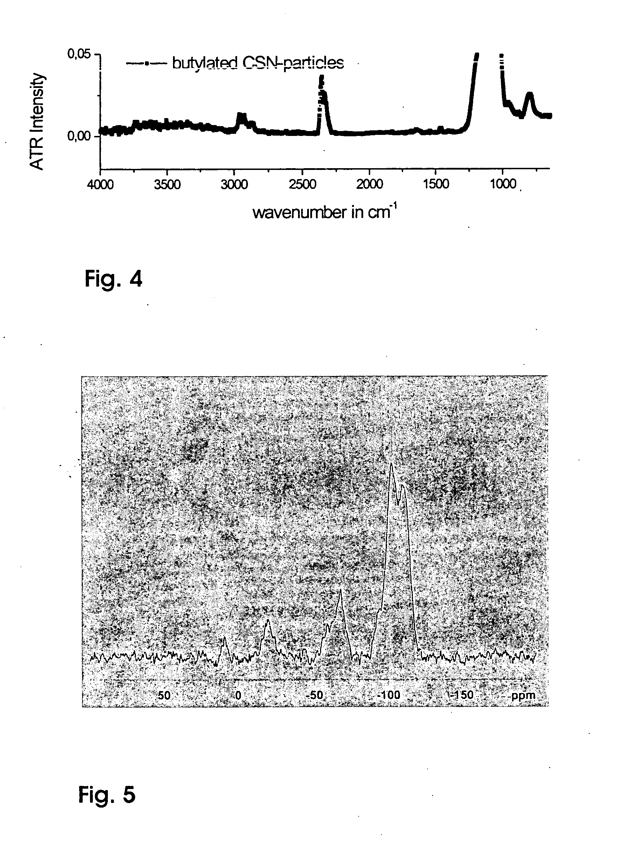

Fig. 4 zeigt das IR-Spektrum von Butyl-funktionalisierten Kieselsäure-Partikeln, die durch die Reaktion von Butyllithium mit CSN entstanden sind. Das IR-Spektrum zeigt alle spezifische Banden für das Kern-SiO-Material und die organische Hülle aus Butylketten: 3739 (Si-OH), 3703 (Si-OH), 3622 (Si-OH), 2967 ($CH_3$), 2930 ($CH_3$), 2908 ($CH_2$), 2867 ($CH_2$), 2365 ($CO_2$), 2339 ($CO_2$), 1468 ($CH_2$), 1410 ($CH_2$), 1383 ($CH_3$), 1262 bis 1014 (SiO), 950 (SiO), 892 (Si-$CH_2$), 808 (SiO) $cm^{-1}$.

Fig. 5 stellt das dazugehörige $^{29}$Si-NMR-Spektrum dar. Auch dieses zeigt alle erwarteten charakteristischen Signale: $\delta$(Q2) = - 92 ppm, $\delta$(Q3) = - 102 ppm, $\delta$(Q4) = - 112 ppm, $\delta$(T4)= - 67 ppm, $\delta$(T2) = -57 ppm, $\delta$(D) = -19 ppm, $\delta$(M)= 9 ppm.

Beispiel 8: Substitution von Chlor an CSN mittels LiAlH$_4$

Zur Hydrierung von 0,5 g CSN werden 2,5 Äquivalente LiAlH$_4$ bezogen auf den Stoffmengenanteil Chlor des CSN eingesetzt, wobei davon ausgegangen wird, dass je LiAlH$_4$ nur ein H reagiert. Sowohl CSN als auch das LiAlH$_4$ werden getrennt in 10 mL Tetrahydrofuran dispergiert und mit Eiswasser gekühlt. Dann werden beide Dispersionen unter Rühren langsam vermischt. Danach wird das Reaktionsgemisch unter Rückfluss für 12 h gekocht. Nach Beendigung der Reaktion wird die Reaktionslösung mit Eiswasser gekühlt und allmählich mit Ethylacetat und 2-Propanol versetzt, um den Überschuss an LiAlH$_4$ in der Dispersion zu beseitigen. Nach Abtrennen des Lösungsmittels wird das Produkt mit Salzsäure ($c$ = 0,1 mol/L) und Methanol gewaschen. Die anschließende Trocknung wird im Vakuum bei 80 °C für 12 h durchgeführt. Das Produkt waren Wasserstoff-funktionalisierte Kieselsäure-Partikel.

Beispiel 9: Vergleich der Eigenschaften erfindungsgemäßer funktionalisierter Kieselsäure-Partikel mit denen von Aerosil[1] und gefällten Kieselsäuren

| Eigenschaft | Aerosil[1] | gefällte Kieselsäuren | Chlorsiloxane aus erfindungsgemäßen mit Chlor funktionalisierten Partikeln als Primärteilchen |
|---|---|---|---|
| Spezifische Oberfläche ($m^2/g$) | 50 bis 600 | 30 bis 800 | 10 bis 680 |
| Durchmesser der Primärteilchen (in nm) | 5 bis 50 | 5 bis 100 | 10 bis 1500 |
| Chlorgehalt w(cl) | < 250 ppm | 0 | 5 bis 32 Gew.-% |
| Dichte an funktionellen Gruppen auf der Oberfläche ($nm^{-2}$) | 2 bis 3 | 6 | 4 bis 11 |
| Struktur | Kettenförmige Agglomerate sphärischer Teilchen | Mäßig aggregierte sphärische Teilchen | Netzwerkartig aggregierte sphärische Teilchen |
| Porendurchmesser (nm) | nicht porös | > 30 | 2 bis 14 |

[1]Daten für Aerosil aus: Grundlagen und Anwendungen von Aerosil®, Schriftenreihe Pigmente, Nr. 11, Degussa AG, 5. Auflage, 1991

**Patentansprüche**

1. Kieselsäure-Partikel, **dadurch gekennzeichnet, dass** sie an ihrer Oberfläche jeweils > 6,5 funktionelle Gruppen pro $nm^2$ umfassen, die über Silizium kovalent an die Partikel gebunden sind.

2. Kieselsäure-Partikel nach Anspruch 1, **dadurch gekennzeichnet, dass** die funktionellen Gruppen ausgewählt sind aus der Gruppe bestehend aus:

    -Cl, -OH, -OR, $-NR_2$, $-PR_2$, -R, -H
    mit R = gesättigter oder ungesättigter organischer Rest oder siliziumorganischer Rest.

3. Vielzahl funktionalisierter Kieselsäure-Partikel nach Anspruch 1 oder 2 oder Vielzahl funktionalisierter Kieselsäure-Partikel, **dadurch gekennzeichnet, dass** der Durchmesser von mehr als 95 % der einzelnen in der Vielzahl enthaltenen Kieselsäure-Partikel um maximal +/- 30 % vom Partikeldurchmessermedian abweicht und zumindest 95 % der in den Partikeln vorhandenen Poren einen Porendurchmesser von 2 bis 14 nm besitzen.

4. Vielzahl funktionalisierter Kieselsäure-Partikel nach Anspruch 3, **dadurch gekennzeichnet, dass** die einzelnen in der Vielzahl enthaltenen Kieselsäure-Partikel röntgenamorph sind.

5. Verfahren zur Herstellung von Kieselsäure-Partikeln nach Anspruch 1 oder 2, die mit Chlor funktionalisiert sind, oder einer Vielzahl von Kieselsäure-Partikeln nach Anspruch 3 oder 4, die mit Chlor funktionalisiert sind, umfassend den Schritt:

    Umsetzen von Siliziumtetrachlorid oder einer Verbindung der allgemeinen Formel $Si_yO_{y-1}Cl_{(2y+2)}$ (mit $y \leq 4$) mit Sauerstoff unter Bedingungen, die eine Reaktion der beiden Substanzen miteinander ermöglichen und die bedingen, dass das dabei entstehende Reaktionsprodukt zu mehr als 99 Atom-% aus Silizium, Chlor und Sauerstoff besteht.

6. Verfahren nach Anspruch 5, **dadurch gekennzeichnet, dass** das Umsetzen innerhalb eines Heißwandströmungsreaktors erfolgt.

7. Verfahren nach Anspruch 5 oder 6, **dadurch gekennzeichnet, dass** das Strömungsrohr des Heißwandströmungsreaktors aus Quarzglas oder keramischen Materialien besteht.

8. Verfahren nach einem der Ansprüche 5 bis 7, **dadurch gekennzeichnet, dass** das Umsetzen unter Verwendung eines Schutzgases erfolgt.

9. Verfahren nach Anspruch 8, **dadurch gekennzeichnet, dass** das Schutzgas Argon ist.

10. Verfahren nach einem der Ansprüche 6 bis 9, **dadurch gekennzeichnet, dass** der Chlorgehalt $w(Cl)$ und/oder die spezifische Oberfläche und/oder die Partikelgröße des mit Chlor funktionalisierten Kieselsäure-Partikels über einen oder mehrere der Parameter (a) Verweilzeit $\tau$ im Strömungsrohr (b) Reaktionstemperatur (c) Stoffmengen-verhältnis $n(SiCl_4) : n(O_2)$ beim Umsetzen (d) Volumenstromanteil des Schutzgases (e) Material des Strömungsrohres und (f) Ausrichtung des Strömungsrohres gesteuert werden.

11. Verfahren zur Herstellung funktionalisierter Kieselsäure-Partikel nach einem der Ansprüche 1 bis 4, umfassend die Schritte:

    a) Bereitstellen von Kieselsäure-Partikeln nach einen der Ansprüche 1 bis 4, die mit Chlor funktionalisiert sind,
    b) teilweises oder vollständiges Substituieren des Chlors.

12. Verfahren nach Anspruch 11, **dadurch gekennzeichnet, dass** im Schritt b zum Substituieren ein Stoff eingesetzt wird, ausgewählt aus der Gruppe bestehend aus:

$H_2O$ R-OH, $R_2NH$, $R_2PH$, R-Mg-X, Li-R und $LiAlH_4$,
mit
R = organischer Rest oder siliziumorganischer Rest und
X = Halogen

Fig. 1

**Fig. 2**

**Fig. 3**

Fig. 4

Fig. 5

Europäisches
Patentamt

**EUROPÄISCHER RECHERCHENBERICHT**

Nummer der Anmeldung

EP 03 02 4279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 396 459 A (RHONE POULENC CHIMIE) 7. November 1990 (1990-11-07) * Seite 5, Zeilen 52,53 * | 1,2 | C01B33/12 C09C1/30 |
| X | US 2002/107316 A1 (HELLRING STUART D ET AL) 8. August 2002 (2002-08-08) * Seite 3, Absatz 36 * | 1,2,4 | |
| X | DE 37 03 079 A (BRUENING ROLF DIPL CHEM DR RER) 11. August 1988 (1988-08-11) * Spalte 2, Zeile 34 - Spalte 3, Zeile 3 * * Spalte 5, Zeilen 3-18 * | 1-7,10 | |
| X | DE 14 42 690 A (BAYER AG) 17. April 1969 (1969-04-17) * Seite 4, Absatz 3 - Seite 6, Absatz 3 * * Beispiel 3 * | 1-6,8-10 | |
| X | DE 199 54 261 A (DEGUSSA) 31. Mai 2000 (2000-05-31) * das ganze Dokument * | 1-5 | RECHERCHIERTE SACHGEBIETE (Int.Cl.7) |
| A | US 5 017 540 A (SANDOVAL JUNIOR E ET AL) 21. Mai 1991 (1991-05-21) * Spalte 5, Zeilen 1-37 * * Spalte 6, Zeilen 26-33 * * Beispiel 1 * | 11,12 | C01B C09C |
| A | GB 848 675 A (GOODRICH CO B F) 21. September 1960 (1960-09-21) * Seite 3, Zeilen 15-47 * * Seite 4, Zeilen 71-86 * | 11,12 | |
| A | US 3 924 032 A (HERTL WILLIAM) 2. Dezember 1975 (1975-12-02) * das ganze Dokument * | 11,12 | |

-/--

Der vorliegende Recherchenbericht wurde für alle Patentansprüche erstellt

| Recherchenort | Abschlußdatum der Recherche | Prüfer |
|---|---|---|
| München | 16. Juni 2004 | Besana, S |

Europäisches
Patentamt

# EUROPÄISCHER RECHERCHENBERICHT

**Nummer der Anmeldung**

EP 03 02 4279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2002/168312 A1 (ROTH HELMUT ET AL) 14. November 2002 (2002-11-14) * Spalte 1, Absatz 7-10 * ----- | 3 | |
| X | US 2003/116062 A1 (ALBRECHT THOMAS ET AL) 26. Juni 2003 (2003-06-26) * Ansprüche 1-4 * ----- | 3 | |
| X | EP 1 213 263 A (SHINETSU CHEMICAL CO) 12. Juni 2002 (2002-06-12) * Seite 4, Zeile 37 - Seite 5, Zeile 1 * * Tabellen 1,2 * ----- | 3 | |
| A | DE 199 49 776 A (INST MIKROTECHNIK MAINZ GMBH) 26. April 2001 (2001-04-26) * Seite 3, Zeilen 43-51 * * Ansprüche 8,9 * ----- | 3,4 | |
| A | EP 0 216 278 A (MERCK PATENT GMBH) 1. April 1987 (1987-04-01) * das ganze Dokument * ----- | 3 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 16. Juni 2004 | Besana, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**Europäisches**

**Patentamt**

Nummer der Anmeldung

EP 03 02 4279

---

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

| Europäisches Patentamt | MANGELNDE EINHEITLICHKEIT DER ERFINDUNG ERGÄNZUNGSBLATT B | Nummer der Anmeldung<br>EP 03 02 4279 |

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1,2,3-11 (wenn auf Anspruch 1 rückbezogen)

    Funktionalisierte Kieselsäure-Partikel mit > 6.5 funktionelle Gruppen pro quadratnanometer Oberfläche und Verfahren zu deren Hestellung.
    ---

2. Ansprüche: 3,4-11 (wenn auf Anspruch 3 rückbezogen)

    Funktionalisierte Kieselsäure-Partikel wobei der Durchmesser von mehr als 95% der Partikeln um maximal +/- 30% vom Partikeldurchmessermedian abweicht und zumindest 95% der in den Partikeln vorhandenen Poren einen Durchmesser von 2 bis 14 nm besitzen.
    ---

**ANHANG ZUM EUROPÄISCHEN RECHERCHENBERICHT**
**ÜBER DIE EUROPÄISCHE PATENTANMELDUNG NR.**          EP 03 02 4279

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2004

| Im Recherchenbericht angeführtes Patentdokument | Datum der Veröffentlichung | Mitglied(er) der Patentfamilie | | Datum der Veröffentlichung |
|---|---|---|---|---|
| EP 0396459 A | 07-11-1990 | FR | 2646664 A1 | 09-11-1990 |
| | | AT | 80863 T | 15-10-1992 |
| | | AU | 633083 B2 | 21-01-1993 |
| | | AU | 5477090 A | 08-11-1990 |
| | | BR | 9002063 A | 13-08-1991 |
| | | CA | 2015922 A1 | 03-11-1990 |
| | | CN | 1047066 A ,B | 21-11-1990 |
| | | CN | 1081100 A | 26-01-1994 |
| | | DE | 69000328 D1 | 29-10-1992 |
| | | DE | 69000328 T3 | 26-02-1998 |
| | | DK | 396459 T3 | 26-10-1992 |
| | | EP | 0396459 A1 | 07-11-1990 |
| | | ES | 2045840 T3 | 16-01-1994 |
| | | FI | 91386 B | 15-03-1994 |
| | | GR | 3006478 T3 | 21-06-1993 |
| | | HK | 8194 A | 04-02-1994 |
| | | IE | 63629 B1 | 17-05-1995 |
| | | KR | 9208564 B1 | 01-10-1992 |
| | | MA | 21826 A1 | 31-12-1990 |
| | | NO | 901883 A | 05-11-1990 |
| | | PT | 93949 A ,B | 08-01-1991 |
| | | SG | 126693 G | 25-02-1994 |
| | | TR | 24265 A | 01-07-1991 |
| | | US | 5612020 A | 18-03-1997 |
| | | US | 5616316 A | 01-04-1997 |
| | | US | 5614176 A | 25-03-1997 |
| | | US | 5286478 A | 15-02-1994 |
| | | ZA | 9003323 A | 27-02-1991 |
| US 2002107316 A1 | 08-08-2002 | US | 2003176559 A1 | 18-09-2003 |
| | | AU | 6785900 A | 13-03-2001 |
| | | WO | 0112731 A1 | 22-02-2001 |
| | | AU | 6537800 A | 19-03-2001 |
| | | AU | 6785800 A | 13-03-2001 |
| | | CA | 2382286 A1 | 01-03-2001 |
| | | CN | 1368995 T | 11-09-2002 |
| | | CN | 1374987 T | 16-10-2002 |
| | | EP | 1212380 A1 | 12-06-2002 |
| | | EP | 1208161 A1 | 29-05-2002 |
| | | JP | 2003507519 T | 25-02-2003 |
| | | JP | 2003507557 T | 25-02-2003 |
| | | TW | 500753 B | 01-09-2002 |
| | | TW | 500755 B | 01-09-2002 |
| | | WO | 0114480 A1 | 01-03-2001 |
| | | WO | 0112730 A1 | 22-02-2001 |
| | | US | 6736891 B1 | 18-05-2004 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 03 02 4279

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 2002107316 | A1 | | US | 6384125 B1 | 07-05-2002 |
| DE 3703079 | A | 11-08-1988 | DE | 3703079 A1 | 11-08-1988 |
| DE 1442690 | A | 17-04-1969 | AT | 256789 B | 11-09-1967 |
| | | | BE | 657866 A | 05-07-1965 |
| | | | CH | 477904 A | 15-09-1969 |
| | | | DE | 1442690 A1 | 17-04-1969 |
| | | | GB | 1092885 A | 29-11-1967 |
| | | | NL | 6415333 A | 05-07-1965 |
| | | | NO | 118373 B | 22-12-1969 |
| | | | US | 3306760 A | 28-02-1967 |
| DE 19954261 | A | 31-05-2000 | DE | 19954261 A1 | 31-05-2000 |
| | | | CN | 1446622 A | 08-10-2003 |
| | | | CN | 1257750 A | 28-06-2000 |
| | | | DE | 59900737 D1 | 28-02-2002 |
| | | | EP | 1004545 A1 | 31-05-2000 |
| | | | JP | 2000167384 A | 20-06-2000 |
| | | | KR | 2000047712 A | 25-07-2000 |
| US 5017540 | A | 21-05-1991 | WO | 9104095 A1 | 04-04-1991 |
| | | | US | 5326738 A | 05-07-1994 |
| GB 848675 | A | 21-09-1960 | DE | 1065825 B | |
| US 3924032 | A | 02-12-1975 | KEINE | | |
| US 2002168312 | A1 | 14-11-2002 | DE | 10065028 A1 | 18-07-2002 |
| | | | EP | 1216956 A2 | 26-06-2002 |
| | | | JP | 2002234722 A | 23-08-2002 |
| US 2003116062 | A1 | 26-06-2003 | DE | 10024466 A1 | 22-11-2001 |
| | | | AU | 5632001 A | 26-11-2001 |
| | | | CA | 2408990 A1 | 15-11-2002 |
| | | | CN | 1443223 T | 17-09-2003 |
| | | | WO | 0188044 A1 | 22-11-2001 |
| | | | EP | 1285031 A1 | 26-02-2003 |
| | | | JP | 2003533579 T | 11-11-2003 |
| EP 1213263 | A | 12-06-2002 | JP | 2002173318 A | 21-06-2002 |
| | | | EP | 1213263 A2 | 12-06-2002 |
| | | | US | 2002102199 A1 | 01-08-2002 |
| DE 19949776 | A | 26-04-2001 | DE | 19949776 A1 | 26-04-2001 |

EPO FORM P0461

Für nähere Einzelheiten zu diesem Anhang : siehe Amtsblatt des Europäischen Patentamts, Nr. 12/82

**ANHANG ZUM EUROPÄISCHEN RECHERCHENBERICHT
ÜBER DIE EUROPÄISCHE PATENTANMELDUNG NR.**

EP 03 02 4279

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2004

| Im Recherchenbericht angeführtes Patentdokument | Datum der Veröffentlichung | Mitglied(er) der Patentfamilie | Datum der Veröffentlichung |
|---|---|---|---|
| EP 0216278 A | 01-04-1987 | DE 3534143 A1 | 02-04-1987 |
| | | DE 3616133 A1 | 19-11-1987 |
| | | AU 588363 B2 | 14-09-1989 |
| | | AU 6246986 A | 26-03-1987 |
| | | CA 1280399 C | 19-02-1991 |
| | | CN 86106689 A ,B | 27-05-1987 |
| | | DE 3684071 D1 | 09-04-1992 |
| | | EP 0216278 A2 | 01-04-1987 |
| | | JP 8025739 B | 13-03-1996 |
| | | JP 62072514 A | 03-04-1987 |
| | | US 4911903 A | 27-03-1990 |
| | | US 4775520 A | 04-10-1988 |

EPO FORM P0461

Für nähere Einzelheiten zu diesem Anhang : siehe Amtsblatt des Europäischen Patentamts, Nr.12/82